Europäisches Patentamt

European Patent Office

Office européen des brevets

(19)

(11) Numéro de publication: **0 172 047**
**B1**

(12) **FASCICULE DE BREVET EUROPEEN**

(45) Date de publication du fascicule du brevet: **08.08.90**

(21) Numéro de dépôt: **85401216.8**

(22) Date de dépôt: **19.06.85**

(51) Int. Cl.⁵: **G 07 F 7/10, H 04 L 9/00**

(54) Procédé et système pour chiffrer et déchiffrer des informations transmises entre un dispositif émetteur et un dispositif récepteur.

(30) Priorité: **19.06.84 FR 8409546**

(43) Date de publication de la demande:
**19.02.86 Bulletin 86/08**

(45) Mention de la délivrance du brevet:
**08.08.90 Bulletin 90/32**

(84) Etats contractants désignés:
**AT BE CH DE FR GB IT LI NL SE**

(56) Documents cités:
**EP-A- 138 386**
**EP-A-0 100 260**
**GB-A-2 019 060**

**COMPUTER DESIGN, vol. 13, no. 4, avril 1974, pages 129-134; C.H. MEYER: "Enciphering data for secure transmission"**

**IBM TECHNICAL DISCLOSURE BULLETIN, vol. 26, no. 5, octobre 1983, pages 2393-2397, New York, US; G.G. PAPAS: "Encryption pin pad"**

(73) Titulaire: **BULL S.A.**
**121, Avenue de Malakoff**
**F-75116 Paris (FR)**

(72) Inventeur: **Girard, Paul**
**94, Avenue Gambetta**
**F-75020 Paris (FR)**
Inventeur: **Groscot, Herbert**
**94, Avenue Gambetta**
**F-75020 Paris (FR)**

EP 0 172 047 B1

Courier Press, Leamington Spa, England.

**Description**

L'invention concerne d'une façon générale la transmission d'informations, et a plus particulièrement pour objet un procédé et un système pour chiffrer et déchiffrer des informations transmises entre un dispositif émetteur et un dispositif récepteur.

L'invention s'applique notamment à la transmission confidentielle d'informations.

De nombreuses applications font maintenant appel à des supports portatifs tels que des cartes au moyen desquelles il est possible d'accéder à un service délivré par un serveur.

La délivrance de ce service impose généralement un dialogue ou un échange d'informations entre la carte et le serveur.

Ce dialogue se traduit généralement par l'émission d'au moins un message qui doit garder un caractère confidentiel pour éviter toute tentative de fraude au niveau de celui qui émet et de celui qui reçoit le message, et au niveau d'un tiers susceptible de capter le message sur la ligne de transmission.

Pour ces raisons, il est fait appel à la technique du chiffrement pour qu'un message chiffré ne puisse être déchiffré que par la personne à laquelle ce message est destiné.

La technique du chiffrement consiste à traiter le message par un algorithme dont le degré de complexité est fonction du degré de sécurité désiré.

Mais cette technique n'a de sens que si l'on fait appel à des algorithmes inversibles pour pouvoir déchiffrer le message. Cependant, compte-tenu que la capacité mémoire disponible dans un objet portatif est limitée et qu'un algorithme inversible, pour un niveau de sécurité minimum, prend relativement de la place mémoire, les opérations de chiffrement et de déchiffrement s'effectuent dans des circuits situés à l'extérieur de l'objet portatif.

Cette solution n'est cependent acceptable que dans des applications où les messages transmis ne renferment que des informations dites passives, c'est-à-dire des informations qui ne donnent pas les moyens d'effectuer une opération protégée. Au contraire, il est des applications où les messages transmis renferment des informations dites actives, c'est-à-dire des informations à partir desquelles il est possible d'effectuer une opération protégée. Dans ce cas il ne faut pas que le message déchiffré soit directement accessible de l'extérieur pour des raisons évidentes de sécurité.

Ce problème se rencontre notamment dans le cas où l'on cherche à écrire une information déterminée (un crédit par exemple) dans un objet portatif.

En effet, l'ordre d'écriture est tout d'abord déchiffré par les circuits de déchiffrement, puis transmis à la carte pour procéder à l'opération d'écriture. Comme il est possible de prendre connaissance de l'ordre d'écriture à l'entrée de la carte, il suffit de réintroduire cet ordre en clair pour recréditer sa carte à volonté. Bien entendu, une telle possibilité doit être impérativement exclue.

Il est donc souhaitable de pouvoir disposer d'objets portatifs susceptibles d'effectuer directement des opérations de déchiffrement, sans avoir recours à des circuit extérieurs à la carte, c'est-à-dire que ces objets renferment les circuits de déchiffrement. Bien entendu, il faut que l'algorithme de chiffrement utilisé soit un algorithme inversible.

Comme un algorithme non inversible prend moins de place mémoire qu'un algorithme inversible pour un même degré de sécurité, l'invention prévoit un procédé qui permet de chiffrer et de déchiffrer des informations à partir d'un algorithme non inversible en donnant à cet algorithme la propriété inversible afin de pouvoir effectuer directement les opérations de déchiffrement à l'intérieur d'un objet portatif conformément au système proposé par l'invention.

Le document "Computer design" (Avril 1974, p. 130) présente un procédé particulier de ce type qui permet de chiffrer et de déchiffrer des données à partir d'un algorithme non inversible. Cependant, le procédé décrit dans ce document peut ne pas offrir toutes les garanties de sécurité requises dans les systèmes nécessitant un haut degré de sécurité. Notamment, il n'évite pas que des étrangers au réseau de communication parviennent à décrypter les messages.

L'invention prévoit donc un procédé selon la revendication 1, un systéme selon la revendication 6 et une certe selon la revendication 12 pour chiffrer et déchiffrer un message transmis entre un dispositif émetteur et un dispositif récepteur.

Comme cela sera explicité plus tard, l'invention permet de satisfaire des applications non envisagées jusqu'à maintenant, notamment pour assurer la sécurité dans des réseaux et pour effectuer des opérations de télévalorisation, c'est-à-dire permettre au détenteur d'une carte de recréditer celle-ci à distance.

D'autres avantages, caractéristiques et détails ressortiront de la description explicative qui va suivre faite en référence aux dessins annexés donnés à titre d'exemple seulement.

La figure 1 représente de façon schématique un système conforme à l'invention.

La figure 2 représente les détails des circuits de chiffrement/déchiffrement inclus dans un support portatif tel qu'une carte.

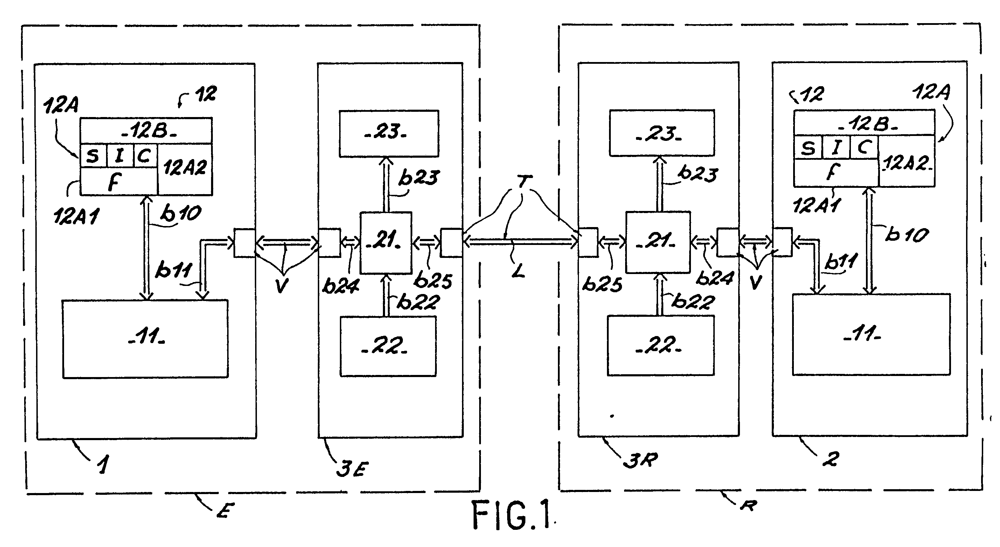

En référence à la figure 1, le système se compose d'une partie émission (E) et d'une partie réception (R).

La partie émission (E) est constituée d'un terminal (3E) et d'un premier objet portatif (1) tel qu'une carte accouplée temporairement ou en permanence à ce terminal. La partie réception (R) est constituée d'un terminal (3R) et d'un second objet portatif (2) tel qu'une carte accouplée temporairement à ce terminal. Les terminaux (3E, 3R) sont reliés entre eux par une voie de transmission classique (L).

Les cartes (1, 2) ont par exemple une structure conforme à celle décrite dans le brevet français n° 2 461 301 de la demanderesse. Chaque carte comporte des circuits de chiffrement/déchiffrement (11), et un ensemble mémoire (12).

L'ensemble mémoire (12) comprend, à titre d'exemple, une mémoire non volatile (12A) et une mémoire volatile (12B). La mémoire (12A) est elle-même divisée en au moins deux zones: une zone secrète (12A1) inaccessible de l'extérieur en écriture/lecture et une zone (12A2) accessible de l'extérieur en lecture/ écriture.

Les circuits de chiffrement/déchiffrement (11) accèdent à l'ensemble mémoire (12) par un bus (b10).

Le terminal (3E) comprend par exemple au moins un dispositif d'écriture/lecture (21) de la carte (1), un dispositif d'entrée (22) de données tel qu'un clavier et accessoirement une unité d'affichage (23). Le dispositif (21) communique avec le clavier (22) par une liaison (b22) et avec l'unité d'affichage (23) par une liaison (b23).

La carte (1) est accouplée au terminal (3E) par une interface (V) telle que décrite dans la demande de brevet français n° 2 483 713 de la demanderesse. Cette interface est reliée aux circuits de chiffrement/ déchiffrement (11) de la carte (1) par une liaison (b11) et au dispositif d'écriture/lecture (21) du terminal (3E) par une liaison (b24).

Le terminal (3R) est identique au terminal (3E) et la carte (2), similaire à la carte (1), est accouplée à ce terminal (3R) par l'interface (V) précitée. Les deux terminaux (3E, 3R) sont reliés par une interface de télécommunication (T) comprenant la voie de transmission (L). Cette interface est reliée aux dispositifs (21) des terminaux (3E, 3R) par une liaison (b25).

Il va être décrit ci-après le contenu de l'ensemble mémoire (12), puis le détail des circuits de chiffrement/déchiffrement (11) des cartes (1, 2).

Les informations suivantes sont enregistrées dans la zone secrète (12A1) de la mémoire de chaque carte (1, 2):
— un code confidentiel (C)
— un code secret (S),
— au moins un identifiant (I), et
— un algorithme (f).

Dans les zones (12A2) et (12B) de la mémoire (12) de chaque carte (1, 2) sont respectivement enregistrées des informations permanentes et des informations temporaires spécifiques des applications envisagées.

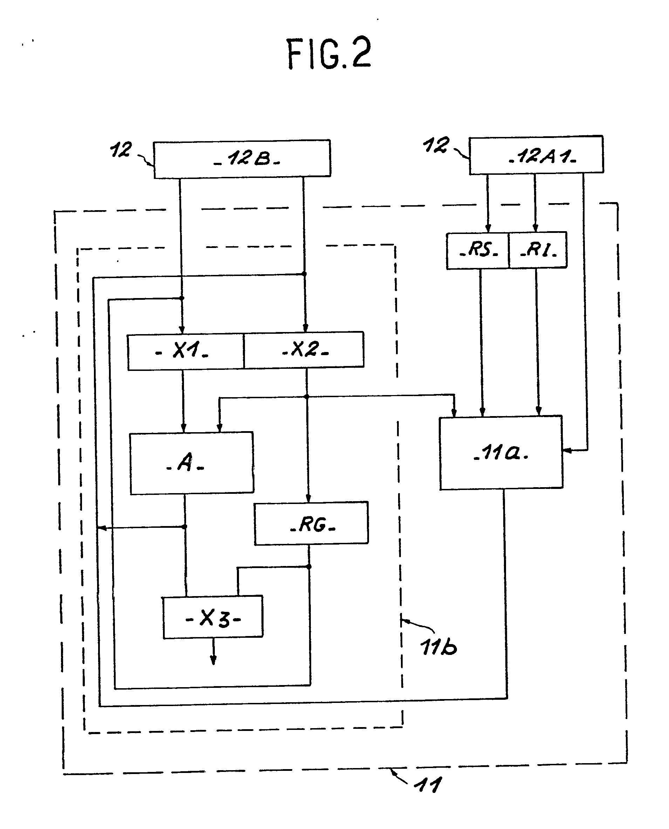

En référence à la figure 2, les circuits de chiffrement/déchiffrement (11) comprennent deux types de circuits (11a, 11b).

Les premiers circuits (11a) sont des circuits de traitement classiques capables d'exécuter l'algorithme (f) enregistré dans les cartes (1, 2).

Ces premiers circuits (11a) sont reliés en entrée à la sortie de deux registres intermédiaires (RS, RI) dont les entrées sont reliées à la zone de mémoire secrète (12A1) de la carte.

Les seconds circuits (11b) sont conçus pour compléter les premiers circuits (11a) dans le cas où l'algorithme (f) est un algorithme non inversible. Ces seconds circuits (11b), qui accomplissent une fonction de symétrisation, comprennent:
— un premier registre (X1) dont l'entrée est reliée à la zone de mémoire (12B) et à la sortie d'un registre de garage (RG), et dont la sortie est reliée à une entrée d'un additionneur (A) modulo 2 chiffre binaire à chiffre binaire,
— un second registre (X2) dont l'entrée est reliée à la zone de mémoire (12B), à la sortie de l'additionneur (A) et à la sortie des premiers circuits (11a), et dont la sortie est reliée à la fois à la seconde entrée de l'additionneur (A), à l'entrée du registre de garage (RG) et à une entrée des premiers circuits (11a), et
— un troisième registre (X3) ou registre de sortie dont l'entrée est reliée aux sorties de l'additionneur (A) et du registre de garage (RG).

Les circuits de chiffrement/déchiffrement (11) scindés en deux parties (11a, 11b) peuvent être avantageusement inclus dans les circuits d'un microprocesseur conçu à cet effet. Il est à noter que l'algorithme (f) n'est pas obligatoirement enregistré dans la mémoire de la carte, il peut être implanté dans la carte sous la forme d'une logique câblée. En outre, la partie émission (E) n'inclut pas obligatoirement un objet portatif (1), les fonctions réalisées à l'émission par l'objet peuvent très bien être intégrées sous une autre forme dans le terminal (3E).

Le fonctionnement des circuits de chiffrement/déchiffrement (11) est décrit ci-après en référence aux figures 1 et 2, avec comme hypothèse l'utilisation d'un algorithme (f) non inversible.

L'opération de chiffrement d'un message revient à appliquer simultanément sur ce message un algorithme non inversible (f) et un algorithme de symétrisation (s1), l'ensemble de ces deux algorithmes revenant finalement à appliquer un algorithme inversible

$$[F=(s1, f)]$$

sur le message.

L'opération de déchiffrement de ce message revient à appliquer simultanément sur le message chiffré le même algorithme non inversible (f) et un algorithme de symétrisation (s2), l'ensemble de ces deux algorithmes revenant à appliquer un algorithme inverse

$$[F^{-1}=(s2, f)]$$

sur le message chiffré.

Si les algorithmes (s1 et s2) sont identiques, l'algorithme $(F^{-1})$ est un algorithme de déchiffrement inverse identique à l'algorithme de chiffrement (F). Dans le cas contraire, l'algorithme $(F^{-1})$ est un algorithme de déchiffrement inverse différent de l'algorithme de chiffrement (F).

Soit un message (M) à transmettre depuis le terminal (3E) au terminal (3R). Ce message (M) peut avoir plusieurs origines:

— être préenregistré dans la zone de mémoire (12B) de la carte (1), ou

— être entré au clavier (22) du terminal (3E), ou

— provenir d'un périphérique (non représenté) ou d'un central (non représenté).

Quelle que soit son origine, le message (M) se retrouve dans tous les cas stocké dans la zone de mémoire (12B) de la carte (1).

Ce message (M) est scindé en deux parties (M1, M2), la partie (M1) du message est stockée dans le registre (X1) et la partie (M2) du message est stockée dans le registre (X2). Cette séparation est prédéterminée à l'avance dans le système.

Il est important de noter que l'algorithme (f) prend en compte le code secret (S) décomposé en p éléments Si. Dans et exemple, l'algorithme (f) prend également en compte l'identifiant (I) décomposé en q éléments Ij et qui personnalise le détenteur de la carte (2) pour une application déterminée.

Le chiffrement du message (M) consiste à effectuer n fois (n étant un nombre entier positif) les opérations suivantes:

— le contenu du registre (X2) est stocké dans le registre de garage (RG) qui va alors contenir la partie (M2) du message (M),

— les circuits de traitement (11a) exécutent l'algorithme (f) sur le contenu du registre (X2), c'est-à-dire sur la partie (M2) du message (M) pour donner un résultat:

$$R1=f (M2, Si, Ij)$$

qui est stocké dans le registre (X2) (avec i supérieur ou égal à 1 et inférieur ou égal à p, et j supérieur ou égal à 1 et inférieur ou égal à q),—l'additionneur (A) des circuits de traitement (11b) additionne modulo 2 chiffre binaire à chiffre binaire le contenu des registres (X1, X2) pour donner un résultat R2:

$$R2=M1+f (M2, Si, Ij)$$

qui est stocké dans le registre (X2), et

— le contenu du registre de garage (RG) est stocké dans le registre (X1) qui va alors contenir la partie (M2) du message (M).

Dans cet exemple et à titre purement indicatif, n va être pris égal à 2, c'est à dire qu'il faut exécuter une nouvelle fois les opérations précitées pour obtenir le message chiffré (M'):

— le contenu du registre (X2) est stocké dans le registre de garage (RG) qui va alors contenir le résultat R2 précité:

$$R2=M1+f (M2, Si, Ij),$$

— les circuits de traitement (11a) exécutent l'algorithme (f) sur le contenu du registre (X2), c'est-à-dire sur le résultat R2 pour donner un résultat R3:

$$R3=f [M1+f (M2, Si, Ij), Si, Ij]$$

qui est ensuite stocké dans le registre (X2),

— l'additionneur (A) additionne modulo 2 chiffre binaire à chiffre binaire le contenu des registres (X1) et (X2) pour donner un résultat R4:

$$R4=M2+f [M1+f (M2, Si, Ij), Si, Ij]$$

qui est ensuite stocké dans le registre (X2).

Les opérations précitées qui viennent d'être effectuées pour un $i$ et un $j$ donné sont effectuées (p.q) fois avec i variant de [1 à p] et j de [1 à q]. Une fois ces opérations terminées, le message chiffré (M') est obtenu dans le registre de sortie (X3) en mettant bout à bout le contenu de l'additionneur (A) et du registre (RG) tels que:

$$M'=M2+f [M1+f (M2, Si, Ij), Si, Ij], M1+f [M2, Si, Ij]$$

dans l'exemple décrit où n=2.

4

Ce message chiffré (M') élaboré au niveau de la partie émettrice (E) est envoyé à la partie réceptrice (R) par la voie de transmission (L). Le message chiffré (M'), une fois reçu par le terminal (3R), est stocké dans la zone de mémoire (12B) de la carte (2) qui se trouve accouplée à ce terminal (3R).

Les circuits de déchiffrement (11) de la carte (2) vont exécuter l'algorithme (f) pour déchiffrer le message (M'). L'opération de déchiffrement revient à appliquer sur le message (M') les mêmes opérations que celles qui ont été effectuées lors du chiffrement du message (M) avec une variante possible suivant que l'on désire obtenir globalement un algorithme de déchiffrement inverse identique ou non à l'algorithme de chiffrement.

Le message chiffré (M') est donc scindé en deux parties (M'1, M'2):

$$M'1=M2+f\ [M1+f\ (M2,\ Si,\ Ij),\ Si,\ Ij]$$

$$M'2=M1+f\ [M2,\ Si,\ Ij]$$

La partie (M'2) du message (M') est stockée dans le registre (X2) et la partie (M'1) du message (M') est stockée dans le registre (X1). Cette séparation s'effectue sur la même base que celle opérée lors du chiffrement.

Comme pour l'opération de chiffrement donnée à titre purement indicatif, les opérations suivantes vont être effectuées deux fois (n=2), ce qui donne:

— le contenu du registre (X2) est stocké dans le registre de garage (RG),

— les circuits de déchiffrement (11a) exécutent l'algorithme (f) sur le contenu du registre (X2) pour donner un résultat (R'1):

$$R'1=f\ [M1+f\ (M2,\ Si,\ Ij),\ Si,\ Ij]$$

qui est stocké dans le registre (X2) (avec i supérieur ou égal à 1 et inférieur ou égal à p, et j supérieur ou égal à 1 et inférieur ou égal à q)

— l'additionneur (A) additionne modulo 2 chiffre binaire à chiffre binaire le contenu des registres (X1, X2) pour donner un résultat R'2:

$$R'2=M2+f\ [M1+f\ (M2,\ Si,\ Ij),\ Si,\ Ij]+f\ [M1+f\ (M2,\ Si,\ Ij),\ Si,\ Ij]=M2$$

qui est stocké dans le registre (X2).

— le contenu du registre de garage (RG) est stocké dans le registre (X1) qui contient alors la partie (M'2) du message (M),

— le contenu de registre (X2) est stocké dans le registre de garage (RG) qui contient alors le résultat R'2 précité qui est égal à la partie (M2) du message,

— les circuits de déchiffrement (11a) exécutent à nouveau l'algorithme (f) sur le contenu du registre (X2) pour donner un résultat (R'3):

$$R'3=f\ M2,\ Si,\ Ij)$$

qui est stocké dans le registre (X2), et

— l'additionneur (A) additionne modulo 2 chiffre binaire à chiffre binaire le contenu des registres (X1 et X2) pour donner un résultat R'4:

$$R'4=M1+f\ (M2,\ Si,\ Ij)+f\ (M2,\ Si,\ Ij)=M1.$$

Comme pour le chiffrement, les opérations précitées effectuées pour un *i* et un *j* donné sont effectuées (p.q) fois avec i variant de [1 à p] et j variant de [1 à q]. Une fois ces opérations terminées, l'additionneur (A) contient la partie (M1) du message initial (M) et le registre de garage (RG) contient la partie (M2) du message initial (M).

L'invention prévoit deux solutions, à savoir:

— associer le contenu de l'additionneur (A) et du registre de garage (RG) de façon à retrouver dans le registre de sortie (X3) le message d'origine M=(M1, M2), ou

— associer le contenu de l'additionneur (A) et du registre de garage (RG) dans le registre de sortie (X3) pour obtenir un message déchiffré différent du message d'origine, par exemple M'=(M2, M1).

Si le registre de sortie (X3) contient le message (M1, M2) c'est-à-dire le message (M) d'origine, l'algorithme de déchiffrement est alors identique à l'algorithme de chiffrement (s1 égal s2).

Si le registre de sortie contient un message déchiffré différent du message d'origine, par exemple M'=(M2, M1), l'algorithme de déchiffrement n'est pas identique à l'algorithme de chiffrement (s1 différent de s2). Mais bien évidement le message déchiffré, quoique différent du message d'origine, sera compréhensible pour la carte.

Cette dissymétrie obtenue, par exemple à la fin du traitement, par une simple inversion du contenu de l'additionneur (A) et du registre de garage (RG) a été donnée à titre purement indicatif. D'une façon plus générale et toujours dans le cadre de l'invention, cette dissymétrie peut être réalisée à une étape quelconque du déchiffrement. A titre d'exemple, la dissymétrie peut être obtenue en faisant varier les indices (i, j) dans un sens croissant pour le chiffrement et dans un sens décroissant pour le déchiffrement.

Le fonctionnement du système tel que décrit précédemment a été envisagé avec comme hypothèse de départ l'utilisation d'un algorithme (f) non inversible.

Dans le cas où l'algorithme (f) choisi est un algorithme inversible, le fonctionnement précité diffère uniquement au niveau des opérations de chiffrement et de déchiffrement qui ne sont plus exécutées que par les circuits de traitement (11a). En effet, il n'est plus nécessaire de faire appel aux circuits de traitement (11b) chargés d'exécuter les algorithmes de symétrisation (s1, s2) que ne sont utilisés que lorsque l'algorithme (f) est un algorithme non inversible.

Plus précisément, l'opération de chiffrement peut se limiter à faire appliquer sur la totalité du message (M) l'algorithme (f) pour donner un message chiffré (M') tel que:

$$M' = f(M, S, I).$$

Ce message (M') est directement déchiffré par les circuits de déchiffrement (11a) de la carte (2) en appliquant sur ce message l'algorithme inverse $(f^{-1})$ tel que:

$$f^{-1}(M') = f^{-1}[f(M, S, I)] = M.$$

L'intérêt de l'invention va être mis en évidence dans les deux exemples d'application décrits ci-après.

Une première application concerne un réseau dans lequel plusieurs personnes peuvent toutes communiquer entre elles par l'intermédiaire d'objets portatifs tels que des cartes. Cette habilitation est obtenue en donnant à ces personnes des cartes qui contiennent toutes le même code secret S, le même identifiant I et un même algorithme de chiffrement/déchiffrement (f). Dans ce cas, l'algorithme de déchiffrement est identique à l'algorithme de chiffrement. Ainsi, toute personne étrangère au réseau se trouve dans l'impossibilité de pouvoir déchiffrer un message et d'envoyer un message à une personne du réseau, dès l'instant où sa carte renferme un code secret différent du code secret des personnes du réseau.

Dans une deuxième application, il est envisagé l'exemple d'une application bancaire et plus particulièrement une opération qui consiste à permettre au détenteur d'une carte, une fois son crédit épuisé, de recréditer sa carte à distance en toute sécurité pour le banquier.

Dans le système représenté à la figure (1), le terminal (3E) est situé chez le banquier, alors que le terminal (3R) est installé soit dans un lieu public, soit au domicile du détenteur de la carte (2) en étant combiné à un poste téléphonique par exemple.

L'opération qui consiste à recréditer la carte (2) d'un montant de X francs se décompose en une suite d'étapes élémentaires:

— première étape:
le détenteur de la carte (2), dénommé ci-après demandeur, téléphone au banquier pour lui signifier l'opération demandée. Le banquier vérifie alors l'état du compte du demandeur et lui signifie ensuite s'il donne ou non l'ordre d'effectuer l'opération demandée.

— deuxième étape:
dans l'affirmative, et d'une façon classique, le demandeur connecte sa carte (2) au terminal (3R) et frappe son code d'identification personnel (C) au clavier (22) du terminal (3R). La carte (2) ou le terminal (3R) vérifie que ce code (C) correspond bien au code (C) préenregistré dans la zone de mémoire (12A1) de la carte (2). S'il n'y a pas coïncidence, il n'est pas donné suite à l'opération demandée.

— troisième étape:
dans le cas contraire, le banquier entre un message (M) au clavier (22) de son terminal (3E), qui traduit un ordre de recréditer la carte (2) d'un montant de X francs, c'est-à-dire donne un ordre d'écriture de la donnée X à une adresse déterminée de la zone de mémoire (12A2) de la carte (2).

— quatrième étape:
le message (M) est transmis à la carte (1) du banquier pour y subir une opération de chiffrement telle que décrite précédemment afin d'obtenir un message chiffré (M').

— cinquième étape:
le message chiffré (M') est transmis au terminal (3R), par la voie de transmission (L) par exemple une ligne téléphonique, puis à la carte (2) du demandeur.

— sixième étape:
le message chiffré (M') subit une opération de déchiffrement telle que décrite précédemment avec la variante où l'algorithme de déchiffrement n'est pas identique à l'algorithme de chiffrement.

Ce message déchiffré est un ordre d'écriture compréhensible par la carte (2), à moins que la carte (2) du

6

demandeur ne contienne pas les mêmes paramètres (S, I) que la carte (1) du banquier. Il est indispensable que le déchiffrement du message chiffré se fasse à l'intérieur de la carte (2) et non à l'extérieur de celle-ci pour éviter au demandeur de pouvoir prendre connaissance du message déchiffré, sinon il lui serait possible de recréditer lui-même sa carte sans recevoir un ordre préalable du banquier. Autrement dit, une fois le message chiffré entré dans la carte (2), il ne faut pas que le message déchiffré soit accessible de l'extérieur.

Dans cette application, il est important que les algorithmes de chiffrement et de déchiffrement ne soient pas identiques, pour empêcher le demandeur de simuler la carte du banquier par une autre carte.

Enfin, il faut prendre une précaution supplémentaire étant donné que le demandeur peut prendre connaissance du message chiffré. En effet, le demandeur sera tenté ensuite de réintroduire le message chiffré dans sa carte afin de la recréditer sans avoir reçu l'ordre préalable du banquier. Cette possibilité lui est interdite dès l'instant où le message chiffré contient une adresse d'écriture dans la carte définie par le banquier et qui varie à chaque utilisation.

**Revendications**

1. Procédé pour chiffrer et déchiffrer un message transmis entre un dispositif émetteur et un dispositif récepteur, consistant à chiffrer le message (M) en lui appliquant un algorithme de chiffrement inversible constitué par un algorithme de chiffrement non inversible (f) combiné avec un algorithme de symétrisation (s1), et à déchiffrer directement le message en appliquant sur le message chiffré un algorithme de déchiffrement inverse constitué de l'algorithme de chiffrement non inversible précité combiné avec un algorithme de symétrisation (s2), caractérisé en ce qu'il consiste à scinder le message (M) en deux parties (M1, M2), à stocker la première partie (M1) du message dans un premier registre (X1), à stocker la seconde partie (M2) du message dans un second registre (X2), et à effectuer n fois les opérations successives suivantes:
— stocker le contenu du second registre (X2) dans un registre de garage (RG),
— exécuter sur le contenu du second registre (X2) l'algorithme non inversible (f) qui prend en compte un élément i d'au moins un code secret (S) décomposé en p éléments,
— stocker le résultat de l'exécution de l'algorithme non inversible (f) dans le second registre (X2),
— additionner modulo 2, chiffre binaire à chiffre binaire, le contenu des premier et second registres (X1, X2),
— stocker le résultat de cette addition dans le second registre (X2), et
— stocker le contenu du registre de garage (RG) dans le premier registre (X1), et
— recommencer les n opérations précitées p fois, i variant de 1 à p, le message chiffré ou déchiffré étant constitué par l'association dans un registre de sortie (X3) du contenu du second registre (X2) et du registre de garage (RG).

2. Procédé selon la revendication 1, caractérisé en ce qu'il consiste à appliquer deux algorithmes de symétrisation (s1, s2) identiques pour que l'algorithme de déchiffrement soit un algorithme inverse identique à l'algorithme de chiffrement (f).

3. Procédé selon la revendication 1, caractérisé en ce qu'il consiste à appliquer deux algorithmes de symétrisation (s1, s2) différents pour que l'algorithme de déchiffrement soit un algorithme inverse différent de l'algorithme de chiffrement (f).

4. Procédé selon l'une des revendications 1 à 3, caractérisé en ce qu'il consiste à déchiffrer directement le message (M) à l'intérieur d'un objet portatif (1) tel qu'une carte connectée au dispositif émetteur.

5. Procédé selon l'une des revendications 1 à 4, caractérisé en ce qu'il consiste à chiffrer directement le message (M) à l'intérieur d'un objet portatif (1) tel qu'une carte connectée au dispositif émetteur.

6. Système pour la mise en oeuvre du procédé selon les revendications 1 à 5 pour chiffrer et déchiffrer un message transmis entre un dispositif émetteur (E) et un dispositif récepteur (R); le dispositif émetteur (E) comprenant au moins des circuits de chiffrement (11) pour exécuter un algorithme de chiffrement (F) et le dispositif récepteur (R) comprenant au moins des circuits de déchiffrement (11) pour exécuter un algorithme de déchiffrement (F-1), caractérisé en ce que les circuits de traitement pour le chiffrement et pour le déchiffrement comprennent un premier registre (X1), un second registre (X2), un registre garage (RG) et un registre de sortie (X3), un additionneur modulo 2 (A), chiffre binaire à chiffre binaire, un mémoire pour enregistrer un algorithme non inversible (f) et au moins un algorithme de symétrisation (s) ainsi qu'un code secret (S), et en ce que l'entrée du registre (X2) est reliée à des moyens permettant d'effectuer l'algorithme non inversible (f) ainsi qu'à la sortie de l'additionneur (A), la sortie du registre (X2) est reliée à la fois à une entrée des moyens d'effectuer l'algorithme non inversible (f), à une entrée de l'additionneur (A) et à l'entrée du registre garage (RG), la sortie du registre (X1) est reliée à l'autre entrée de l'additionneur (A), les sorties de l'additionneur (A) et du registre de garage (RG) sont reliées à l'entrée du registre de sortie (X3).

7. Système selon la revendication 6, caractérisé en ce que les circuits de déchiffrement (11) sont inclus dans un objet portatif (2) tel qu'une carte connectée au dispositif récepteur (R).

8. Système selon la revendication 7, caractérisé en ce que les circuits de déchiffrement (11) comprennent des premiers circuits de traitement (11a) d'un algorithme non inversible (f) appliqué au message chiffré combinés à des seconds circuits de traitement (11b) d'un algorithme de symétrisation (s2) pour déchiffrer le message.

9. Système selon l'une des revendications 6 à 8, caractérisé en ce que les algorithmes précités (f, s2) pour le déchiffrement sont enregistrés dans une mémoire de la carte (2) connectée au dispositif récepteur (R).

10. Système selon l'une des revendications 6 à 9, caractérisé en ce que les premiers et seconds circuits (11a, 11b) pour le chiffrement et pour le déchiffrement sont intégrés dans un microprocesseur.

11. Système selon l'une des revendications 6 à 10, caractérisé en ce que les circuits de chiffrement (11) du dispositif émetteur (E) sont inclus dans un objet portatif (1) tel qu'une carte connectée au dispositif émetteur (E).

12. Carte pour la mise en oeuvre du procédé selon les revendications 1 à 5 dans le système selon les revendications 6 à 11, caractérisée en ce qui elle comprend des circuits de traitement comprenant au moins, pour le chiffrement comme pour le déchiffrement, un premier registre (X1), un second registre (X2), un registre de garage (RG) et un registre de sortie (X3), un additionneur modulo 2 (A), chiffre binaire à chiffre binaire, une mémoire pour enregistrer un algorithme non inversible (f) et au moins un algorithme de symétrisation (s) ainsi qu'un code secret (S), en ce que l'entrée du registre (X2) est reliée à des moyens permettant d'effectuer l'algorithme non inversible (f) ainsi qu'à la sortie de l'additionneur (A), la sortie du registre (X2) est reliée à la fois à une entrée des moyens d'effectuer l'algorithme non inversible (f), à une entrée de l'additionneur (A) et à l'entrée du registre garage (RG), la sortie du registre (X1) est reliée à l'autre entrée de l'additionneur (A), les sorties de l'additionneur (A) et du registre garage sont reliées à l'entrée du registre de sortie (X3).

## Patentansprüche

1. Verfahren zum Ver- und Entschlüsseln einer Nachricht, die zwischen einem Sender und einem Empfänger übertragen wird, wobei die Nachricht (M) verschlüsselt wird, indem ihr ein umkehrbarer Verschlüsselungsalgorhythmus zugeordnet wird, der aus einem nicht umkehrbaren Verschlüsselungsalgorhythmus (f) kombiniert mit einem Symmetrierungsalgorhythmus (s1) besteht, und die Nachricht direkt entschlüsselt wird, indem ihr ein verkehrter Entschlüsselungsalgorhythmus zugeordnet wird, der aus dem genannten, nicht umkehrbaren Verschlüsselungsalgorhythmus kombiniert mit einem Symmetrierungsalgorhytmus (s2) besteht, dadurch gekennzeichnet, daß man die Nachricht (M) in zwei Teile (M1, M2) trennt, den ersten Teil (M1) der Nachricht in einem ersten Register (X1) speichert, den zweiten Teil (M2) der Nachricht in einem zweiten Register (X2) speichert und n-mal die folgenden, aufeinanderfolgenden Vorgänge vornimmt:

— den Inhalt des zweiten Registers (X2) in einem Ausweichregister (RG) speichert,

— auf den Inhalt des zweiten Registers (X2) den nicht umkehrbaren Algorhythmus (f) anwendet, der ein Element (i) wenigstens eines in p-Elemente zerlegten Geheimkodes (S) berücksichtigt,

— das Ergebnis der Anwendung des nicht umkehrbaren Algorhythmus (f) auf das zweite Register (X2) speichert-

— Binärziffer für Binärziffer den Inhalt des ersten und zweiten Registers (X1, X2) Modulo (2) addiert,

— das Ergebnis dieser Addition im zweiten Register (X2) speichert, und

— den Inhalt des Ausweichregisters (RG) im ersten Register (X1) speichert, und

— die erwähnten n-Vorgänge p-mal wiederholt, wobei i sich von 1 bis p ändert, die verschlüsselte oder nichtverschlüsselte Nachricht durch die Vereinigung in einem Ausgangsregister (X3) des Inhaltes des zweiten Registers (X2) und des Ausweichregisters (RG) gebildet ist.

2. Verfahren nach Anspruch 1, dadurch gekennzeichnet, daß es darin besteht, zwei identische Symmetrierungsalgorhythmen (S1, S2) anzuwenden, damit der Entschlüsselungsalgorhythmus ein verkehrter Algorhythmus identisch mit dem Verschlüsselungsalgorhythmus (f) ist.

3. Verfahren nach Anspruch 1, dadurch gekennzeichnet, daß es darin besteht, zwei verschiedene Symmetrierungsalgorhythmen (S1, S2) anzuwenden, damit der Entschlüsselungsalgorhythmus ein verkehrter Algorhythmus verschieden vom Verschlüsselungsalgorhythmus (f) ist.

4. Verfahren nach einem der Ansprüche 1 bis 3, dadurch gekennzeichnet, daß es darin besteht, die Nachricht (M) direkt im Inneren eines tragbaren Gegenstandes (1) zu entschlüsseln, wie z.B. eine mit dem Sender verbundene Karte.

5. Verfahren nach einem der Ansprüche 1 bis 4, dadurch gekennzeichnet, daß es darin besteht, die Nachricht (M) im Inneren eines tragbaren Gegenstandes (1) direkt zu verschlüsseln, wie einer mit dem Sender verbundenen Karte.

6. System zur Durchführung des Verfahrens nach den Ansprüchen 1 bis 5 zum Verschlüsseln oder Entschlüsseln einer Nachricht, die zwischen einem Sender (E) und einem Empfänger (R) übertragen wird, wobei der Sender (E) wenigstens Verschlüsselungskreise (11) zur Anwendung eines Verschlüsselungsalgorhythmus (F) und der Empfänger (R) wenigstens Entschlüsselungskreise (11) zur Anwendung eines Entschlüsselungsalgorhythmus (F1) aufweisen, dadurch gekennzeichnet, daß die Arbeitskreise für die Verschlüsselung und für die Entschlüsselung ein erstes Register (X1), ein zweites Register (X2), ein Ausweichregister (RG) und ein Ausgangsregister (X3), einen Modulo-2-Addierer (A) für Binärziffer nach Binärziffer, einen Speicher zum Festhalten eines nicht umkehrbaren Algorhythmus (f) und wenigstens eines Symmetrierungsalgorhythmus (s) sowie eines Geheimschlüssels (S) umfaßt, und daß der Eingang des Registers (X2) mit Einrichtungen verbunden ist, die es gestatten, den nicht umkehrbaren Algorhythmus (f) sowie den Ausgang des Addierers (A) wirksam zu machen, daß der Ausgang des Registers (2) gleichzeitig mit einem Eingang der Einrichtungen zum Wirksammachen des nicht umkehrbaren Algorhythmus (f), mit einem Eingang des Addierers (A) und mit dem Eingang des Ausweichregisters (RG) verbunden ist, daß der Ausgang des Registers (X1) mit dem anderen Eingang des Addierers (A) verbunden ist, und daß die Ausgänge des Addierers (A) und des Ausweichregisters (RG) mit dem Eingang des Ausgangsregisters (X3) verbunden sind.

7. System nach Anspruch 6, dadurch gekennzeichnet, daß die Entschlüsselungskreise (11) in einem tragbaren Gegenstand (2) enthalten sind, wie z.B. einer Karte, die mit dem Empfänger (R) verbunden ist.

8. System nach Anspruch 7, dadurch gekennzeichnet, daß die Entschlüsselungskreise (11) erste Arbeitskreise (11a) eines nicht umkehrbaren Algorhythmus (f) enthalten, der auf die verschlüsselte Nachricht angewandt wird, und zwar zusammen mit zweiten Arbeitskreisen (11b) eines Symmetrierungsalgorhythmus (s2) zum Entschlüsseln der Nachricht.

9. System nach einem der Ansprüche 6 bis 8, dadurch gekennzeichnet, daß die erwähnten Algorhythmen (f, s2) für die Entschlüsselung in einem Speicher der mit dem Empfänger (R) verbundenen Karte (2) festgehalten sind.

10. System nach einem der Ansprüche 6 bis 9, dadurch gekennzeichnet, daß die ersten und zweiten Kreise (11a, 11b) für die Verschlüsselung und für die Entschlüsselung in einem Mikroprozessor integriert sind.

11. System nach einem der Ansprüche 6 bis 10, dadurch gekennzeichnet, daß die Verschlüsselungskreise (11) des Senders (E) in einem tragbaren Gegenstand (1), wie einer mit dem Sender (E) verbundenen Karte, enthalten sind.

12. Karte für die Durchführung des Verfahrens nach den Ansprüchen 1 bis 5 bei dem System gemäß den Ansprüchen 6 bis 11, dadurch gekennzeichnet, daß sie Arbeitskreise aufweist, die wenigstens für die Verschlüsselung wie für die Entschlüsselung ein erstes Register (X1), ein zweites Register (X2), ein Ausweichregister (RG) und ein Ausgangsregister (X3), einen Modulo-2-Addierer (A) für Binärziffer nach Binärziffer, einen Speicher zum Festhalten eines nicht umkehrbaren Algorhythmus (f) und wenigstens eines Symmetrierungsalgorhythmus (s) sowie eines Geheimschlüssels (S) aufweist, daß der Eingang des Registers (X2) mit Einrichtungen verbunden ist, die das Wirksammachen des nicht umkehrbaren Algorhythmus (f) sowie des Ausganges des Addierers (A) gestatten, daß der Ausgang des Registers (X2) gleichzeitig mit einem Eingang der Einrichtungen zum Wirksammachen des nicht umkehrbaren Algorhythmus (f), einem Eingang des Addierers (A) und dem Eingang des Ausweichregisters (RG) verbunden ist, daß der Ausgang des Registers (X1) an den anderen Eingang des Addierers (A) angeschlossen ist und daß die Ausgänge des Addierers (A) und des Ausweichregisters mit dem Eingang des Ausgangsregisters (X3) verbunden sind.

## Claims

1. A method of ciphering and deciphering a message transmitted between an emitter device and a receiver device, consisting in ciphering the message (M) by applying to it a reversible ciphering algorithm consisting of an irreversible ciphering algorithm (f) combined with a symmetrization algorithm (s1), and in deciphering the message directly by applying to the ciphered message a reverse deciphering algorithm consisting of the aforesaid irreversible ciphering algorithm combined with a symmetrization algorithm (s2), characterized in that it consists in splitting up the message (M) into two portions (M1, M2), in storing the first portion (M1) of the message in a first register (X1), storing the second portion (M2) of the message in a second register (X2), and performing n times the following successive operations:
— storing the contents of the second register (X2) in a garage register (RG);
— executing upon the contents of the second register (X2) the irreversible algorithm (f) which takes into account an element *i* of at least one secret code (S) decomposed into p elements;
— storing the result of the execution of the irreversible algorithm (f) in the second register (X2);
— adding modulo 2 binary digit to binary digit, the contents of the first and second registers (X1, X2);
— storing the result of this addition in the second register (X2); and
— storing the contents of the garage register (RG) in the first register (X1); and
— recommencing the aforesaid n operations p times with i varying from 1 to p, the ciphered or deciphered message consisting of the association in an output register (X3) of the contents of the second register (X2) and of the garage register (RG).

2. A method as in Claim 1, characterized in that it consists in applying two identical symmetrization algorithms (s1, s2) in order that the deciphering algorithm shall be a reverse algorithm identical with the ciphering algorithm (f).

3. A method as in Claim 1, characterized in that it consists in applying two different symmetrization algorithms (s1, s2) in order that the deciphering algorithm shall be a reverse algorithm different from the ciphering algorithm (f).

4. A method as in one of the Claims 1 to 3, characterized in that it consists in directly deciphering the message (M) inside a portable object (1) such as a card connected to the emitter device.

5. A method as in one of the Claims 1 to 4, characterized in that it consists in directly ciphering the message (M) inside a portable object (1) such as a card connected to the emitter device.

6. A system for putting into effect the method as in Claims 1 to 5 for ciphering and deciphering a message transmitted between an emitter device (E) and a receiver device (R); the emitter device (E) comprising at least ciphering circuits (11) for executing a ciphering algorithm (F) and the receiver device (R) comprising at least deciphering circuits (11) for executing a deciphering algorithm (F⁻¹), characterized in that the processing circuits for the ciphering and for the deciphering comprise a first register (X1), a second register (X2), a garage register (RG) and an output register (X3), a modulo 2 binary digit to binary digit adder (A), a memory for recording an irreversible algorithm (f) and at least one symmetrization algorithm (s) as well as a secret code (S), and in that the input to the register (X2) is connected to means enabling the irreversible algorithm (f) to be effected as well as to the output from the adder (A), the output from the register (X2) is connected both to one input to the means of effecting the irreversible algorithm (f), to one input to the adder (A) and to the input to the garage register (RG), the output from the register (X1) is connected to the other input to the adder (A), and the outputs from the adder (A) and garage register (RG) are connected to the input to the output register (X3).

7. A system as in Claim 6, characterized in that the deciphering circuits (11) are included in a portable object (2) such as a card connected to the receiver device (R).

8. A system as in Claim 7, characterized in that the deciphering circuits (11) comprise first circuits (11a) for processing an irreversible algorithm (f) applied to the ciphered message, combined with second circuits (11b) for processing a symmetrization algorithm (s2) for deciphering the message.

9. A system as in one of the Claims 6 to 8, characterized in that the aforesaid algorithms (f, s2) for the deciphering are recorded in one memory of the card (2) connected to the receiver device (R).

10. A system as in one of the Claims 6 to 9, characterized in that the first and second circuits (11a, 11b) for the ciphering and for the deciphering are integrated into one microprocessor.

11. A system as in one of the Claims 6 to 10, characterized in that the ciphering circuits (11) of the emitter device (E) are included in a portable object (1) such as a card connected to the emitter device (E).

12. A card for putting into effect the method as in Claim 1 to 5 in the system as in Claims 6 to 11, characterized in that it comprises processing circuits which comprise both for the ciphering and for the deciphering at least one first register (X1), one second register (X2), one garage register (RG) and one output register (X3), one modulo 2 binary digit to binary digit adder (A), one memory for recording an irreversible algorithm (f) and at least one symmetrization algorithm (s) as well as a secret code (S), and in that the input to the register (X2) is connected to means enabling the irreversible algorithm (f) to be effected as well as to the output from the adder (A), the output from the register (X2) is connected both to one input to the means of effecting the irreversible algorithm (f), to one input to the adder (A) and to the input to the garage register (RG), the output from the register (X1) is connected to the other input to the adder (A), and the outputs from the adder (A) and from the garage register are connected to the input to the output register (X3).

FIG.1

EP 0 172 047 B1

# FIG.2